# EUROPÄISCHE PATENTANMELDUNG

(11) **EP 4 570 669 A1**
(43) Veröffentlichungstag der Anmeldung: **18.06.2025**
(21) Anmeldenummer: 23216555.5
(22) Anmeldetag: 14.12.2023
(51) Int. Cl.: B64F 1/36, B25J 9/00, B65G 61/00, B65G 65/00

(54) **ROBOTERGEFÜHRTES TRAY LADESYSTEM**

(71) Anmelder: Siemens Logistics GmbH, 90429 Nürnberg (DE)
(72) Erfinder: Klossek, Andreas, 90547 Stein-Deutenbach (DE); Mueck, Bengt, 90429 Nürnberg (DE); Teller, Bernhard, 90429 Nürnberg (DE); Zisch, Rainer, 78337 Öhningen (DE)
(74) Vertreter: Siemens Patent Attorneys

(57) **Zusammenfassung**

Zur Verbesserung der Konfigurierbarkeit eines Tray Ladesystem (15) wird ein Verfahren zum Beladen von Trays (5) mit Gepäckstücken (8) und ein zugehöriges Tray Ladesystem (15) mit einem Roboter (20) vorgeschlagen. Die Gepäckstücke (8) werden mit einem Bandförderer (10) dem Tray-Ladesystem (15) zugeführt, wobei:
a) Lage und Ziel der auf dem Bandförderer (10) herangeführten Gepäckstücke (8) werden von einem Detektorsystem registriert,
b) ein Roboter (20) führt mittels einer Robotersteuerung unterhalb des Bandförderers (10) auf einen auf einer Robotergabel (26) befindlichen Tray (5) in Förderrichtung (9) des Bandförderers (10) ein,
c) das Gepäckstück (8) wird durch Gravitation in den Tray (5) gefördert (13a);
d) der mit einem Gepäckstück (5) beladene Tray (5) wird vom Roboter (20) an einer Zielstelle (16) platziert.

## Beschreibung

Die vorliegende Erfindung betrifft das technische Gebiet der Fördersysteme/Sortiersysteme für Stückgüter/Gepäckstücke in Transportbehältern oder Trays, speziell für Flughafen-Gepäckförderanlagen wie dies beispielsweise in der Veröffentlichung WO 2015/024930 A1 [2] beschrieben ist.

In vielen Flughafen-Gepäckförderanlagen werden Gepäckstücke in Transportbehältern - im Folgenden einheitlich als «Tray» bezeichnet - befördert. Die Gepäckstücke werden zu einem Tray Ladesystem transportiert und dort jeweils in einen Tray geladen, der in der Anlage weiteren Prozessschritten wie Röntgen, Sortierung oder Lagerung/Zwischenlagerung unterzogen wird, bis der Tray auf eine von Informationen bezüglich des Gepäckstückes bestimmten Entladestelle, typischerweise ein einem Flugzeug zugeordnetes Band (=Sortierziel), entladen wird. Da jedes Gepäckstück einen individuellen Sortierprozess und ein individuelles einem Flugzeug zugeordnetes Band (=Sortierziel) hat, wird jeweils nur ein Gepäckstück auf einen Tray geladen. Der Durchsatz einer solchen Anlage korrespondiert daher direkt mit dem Durchsatz der Anzahl Trays. Die benötigte Kapazität muss daher in einem für den jeweiligen Anwendungsfall hinreichend dimensionierten Trayvorrat bereitgestellt werden.

Das vorgenannte Tray Ladesystem ist typischerweise als «Topload Konfiguration» ausgebildet:
Ein spezieller Bandförderer ist über einem Trayförderer installiert. Der Trayförderer befördert unter dem vorgenannten Bandförderer einen Tray. Der Bandförderer fördert das Gepäckstück über eine Kante am Ende des Bandförderers. Das Gepäckstück «fällt» von oben auf den Tray bzw wird durch Gravitation auf den Tray gefördert. Solche «Topload Konfigurationen» sind sehr leistungsfähig.

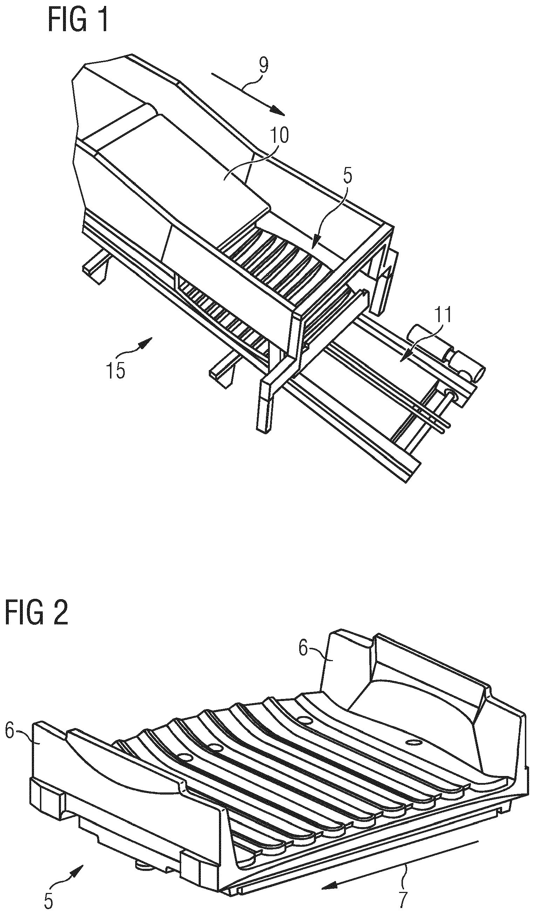

Diese bekannte Topload Konfiguration ist in der FIG 1 dargestellt. Die Fallhöhe - deshalb «fällt» - ist nicht sehr gross und die Relativgeschwindigkeit des Gepäckstückes zum zu beladenden Tray ist vorzugsweise gering bis sehr gering. Dadurch erleidet das Gepäckstück keine grossen und somit schädigenden Beschleunigungen. Die leeren Trays rücken von flussaufwärts unter dem Bandförderer nach. Die Verwendung von Trays ermöglicht somit eine kostengünstige, Energie effiziente und Gepäck schonende Verarbeitung der Gepäckstücke. Die meist quaderförmigen Gepäckstücke liegen zufällig auf dem Bandförderer. Dies setzt sich fort beim «Fall» auf den Tray: Die Lage der Gepäckstücke auf den Trays ist ebenfalls zufällig, also insbesondere nicht ausgerichtet bzw parallel zur rechteckigen Form des Trays.

Aus der Schrift EP 4 108 604 A1 [1] ist ein Verfahren zum Beladen von Transportbehältern mit Gepäckstücken und eine Förderanlage offenbart. Insbesondere für eine Flughafen-Gepäckförderanlage umfasst dieses Verfahren folgende Schritte:
Wenn zwei oder mehr aufeinander folgende Gepäckstücke mit übereinstimmendem Ziel und passenden Dimensionen gefunden werden, werden diese Stückgüter gemeinsam auf einen Tray geladen und gemäß dem übereinstimmenden Ziel behandelt und am Sortierziel entladen. Andernfalls erfolgt ein individuelles Beladen der Stückgüter auf jeweils einen eigenen Tray. Die Mehrfachbeladung funktioniert nur dann, wenn die betreffenden Gepäckstücke auf dem Bandförderer hintereinander folgen.

Der vorliegenden Erfindung liegt daher die Aufgabe zugrunde, ein Verfahren zum Beladen von Trays mit Gepäckstücken und ein Tray Ladesystem anzugeben, das erlaubt,
- bei identischem Ziel mehrere Gepäckstücke in beliebiger ankommender Reihenfolge auf einen Tray zu laden,
- die Kapazität von Tray Ladesystemen bei Integration eines Sortierprozesses weiter zu erhöhen,
- das schonende Beladen der Gepäckstücke auf einen Tray weiter zu verbessern und
- ohne zusätzlichen Raumbedarf (Fläche, Höhe) bei integrierten Sortierprozessen auszukommen.

Diese Aufgabe wird durch die in den unabhängigen Patentansprüchen angegebenen Merkmale gelöst. Vorteilhafte Ausgestaltungen der Erfindung sind in weiteren Ansprüchen angegeben.

Die erfindungsgemäße Lösung zeichnet sich aus durch ein Verfahren zum Beladen von Trays mit Gepäckstücken in einem Tray Ladesystem, wobei die Gepäckstücke mit wenigstens einem Bandförderer dem Tray Ladesystem zugeführt werden und die Gepäckstücke für eine Zielstelle der Trays vorgesehen sind, mit den Verfahrensschritten:
a) Lage und Ziel der auf dem Bandförderer herangeführten Gepäckstücke werden von einem Detektorsystem registriert,
b) ein Roboter führt mittels einer Robotersteuerung unterhalb des Bandförderers auf einen auf einer Robotergabel befindlichen Tray in Förderrichtung des Bandförderers gemäss der registrierten Lage, Dimension, Geschwindigkeit und Ziel der Gepäckstücke ein,
c) das Gepäckstück wird am Ende des Bandförderers durch Gravitation in den Tray gefördert;
d) der mit einem Gepäckstück beladene Tray wird vom Roboter an einer Zielstelle platziert.

Das erfindungsgemässe Tray Ladesystem, bei dem Gepäckstücke mit einem Bandförderer zugeführt und in Trays abgelegt werden, umfasst Mittel zur Durchführung des erfindungsgemässen Verfahrens.

Eine bevorzugte Ausführungsform des vorgenannten Tray Ladesystem umfasst:
- wenigstens einen Bandförderer zum Zuführen von Gepäckstücken,
- ein Detektorsystem, das Lage und Ziel der auf dem Bandförderer herangeführten Gepäckstücke registriert,
- einen Roboter und eine zugehörige Robotersteuerung die einen auf einer Robotergabel befindlichen Tray unterhalb des Bandförderers in dessen Förderrichtung einführen, so dass am Ende des Band-förderers das Gepäckstück in den Tray gefördert wird und
- eine Zielstelle, in die der mit einem Gepäckstück beladene Tray vom Roboter platziert wird.

Der Einsatz des Roboters erlaubt, die beladenen Trays entweder auf einen Trayförderer für den unmittelbaren Weitertransport oder in einen von seinem Greifraum erreichbaren Tray-Regal abzulegen. Das Tray-Regal kann als temporärer Speicher für eine Mehrfachbeladung verwendet werden oder als Langzeitspeicher für eine sogenannte Frühgepäckspeicherung («early baggage») vorgesehen werden. Die Merkmale «temporärer Speicher» und «Langzeitspeicher» sind hinsichtlich des Verfahrens funktionelle Merkmale. Hinsichtlich des Tray Ladesystems unterscheiden sich die Merkmale «temporärer Speicher» und «Langzeitspeicher» allenfalls nur bezüglich der Dimensionierung des Tray-Regals.

Der vorgenannte Fall eines Tray-Regals als temporärer Speicher ermöglicht, dass mehr als nur aufeinanderfolgende Gepäckstücke für eine Mehrfachbeladung des Trays kombiniert werden können. Die Chance, dass sich mehrere Gepäckstücke finden, die zusammen dasselbe Ziel haben und in einen Tray passen, ist erheblich höher, wenn ankommende Gepäckstücke mit einer Menge von in einem Tray-Regal gespeicherten Gepäckstücken gleicher Ziele kombiniert werden können. Die Gesamtleistung eines solchen mit Roboter betriebenen Tray Ladesystems steigt. Diese Lösung ist deshalb möglich, weil bei den ankommenden Gepäckstücken nicht nur deren Lage, und ggf deren Dimension und Geschwindigkeit, sondern auch deren Ziel/Flugnummer/IATA-Code registriert wird und bei der Ablage eines Trays auch das Ziel des auf dem Tray befindlichen Gepäckstücks gespeichert wird. Im Folgenden wird nicht konsequent unterschieden zwischen Ziel, Flugnummer und IATA-Code; in den Patentansprüchen werden Ziel, Flugnummer und IATA-Code unter dem Sammelbegriff «Ziel» subsummiert. Die vorgenannte Information bzw. das Ziel wird später benutzt für das Beladen eines solchen Trays mit einem weiteren Gepäckstück mit dem gleichen Ziel: 7 Mehrfachbeladung eines Trays mit Gepäckstücken. Mit dieser Mehrfachbeladung hat das Tray-Regal auch die Funktion einer Behälterversorgung.

So können sich zusätzliche Vorteile ergeben:
i) Die Verwendung eines Roboters ermöglicht in jeder Hinsicht weitere Freiheitsgrade bei der Realisation eines solchen Tray Ladesystem: Damit ist es möglich, für die Zielstelle verschiedene Einheiten in verschiedener Lage vorzusehen, so zB
   - mehrere Trayförderer nebeneinander und/oder vertikal auf verschiedenen Ebenen,
   - mehrere als Tray-Regal vorgesehene Zwischenspeicher für mit Gepäckstücken beladene Trays. Je nach Speicherdauer dienen diese Zwischenspeicher als temporärer Speicher oder als Langzeitspeiche.
ii) Die Gepäckstücke können von mehreren Bandförderern in verschiedener räumlicher Lage entnommen werden. Dies gilt selbstverständlich solange, als die Enden der Bandförderer im im Greifraum eines solchen Roboters liegen.
iii) Die erfindungsgemässe Lösung erfordert mit Ausnahme der Installation eines Detektorsystems für die Registrierung von Lage - ggf Dimension und Geschwindigkeit - einschliesslich von Barcode-Readern oder von RFID-Lesegeräten zur Erfassung von Ziel/Flugnummer/IATA-Code der Gepäckstücke keine Anpassung an bestehenden Bandförderanlagen für die Gepäckstücke, mit anderen Worten: Die Fördertechnik braucht nicht angepasst zu werden. Die Beladung der Trays und eine (Vor-) Sortierung auf mehrere Trayförderer (Tray Lines) mit einem Roboter benötigt insgesamt deutlich weniger Platz als die bekannten Gepäcksortieranlagen.
iv) Durch die Registrierung der Lage der herangeführten Gepäckstücke auf dem Bandförderer können durch Drehen und Neigen der Robotergabel und damit des darauf befindlichen Trays die Gepäckstücke auf den Trays in einer ausgerichteten «parallelen» Weise abgelegt werden.
v) Aufeinanderfolgende Gepäckstücke mit gleichem Ziel können gemäss ihrer registrierten Dimension im gleichen Schritt in den gleichen Tray geladen werden. Dadurch erhöht sich die Kapazität eines solchen Tray Ladesystems.
vi) Durch die Registrierung von Lage, Dimension und Geschwindigkeit der herangeführten Gepäckstücke können durch entsprechendes Neigen der Robotergabel (und damit des darauf befindlichen Trays) entgegen der Bewegungsrichtung des Bandförderers die Gepäckstücke schonender auf die Trays gefördert werden.
vii) Durch die Verwendung mehrerer Roboter lassen sich verschiedene Konfiguration erzielen wie:
   - Bedienung mehrerer Trayförderer, um eine (Vor-) Sortierung zu erzielen;
   - Bedienung mehrerer Bandförderer. Bandförderer/Trayförderer beinhalten eine m:n-Beziehung, wobei m für die Anzahl Bandförderer und n für die Anzahl Trayförderer steht.

Weitere vorteilhafte Ausführungsformen der Erfindung sind in den abhängigen Patentansprüchen angegeben.

Die Erfindung wird nachfolgend anhand der Zeichnung beispielsweise näher erläutert. Dabei zeigen:
Figur 1 Perspektive Ansicht eines Tray Ladesystems (auch Topload Konfiguration) gemäss dem Stand der Technik;
Figur 2 Perspektivische Ansicht eines Trays;
Figur 3A bis 3C
   beispielhafte Abfolge der Bewegungen eines Roboters zum Beladen eines Trays mit einem Gepäckstück;

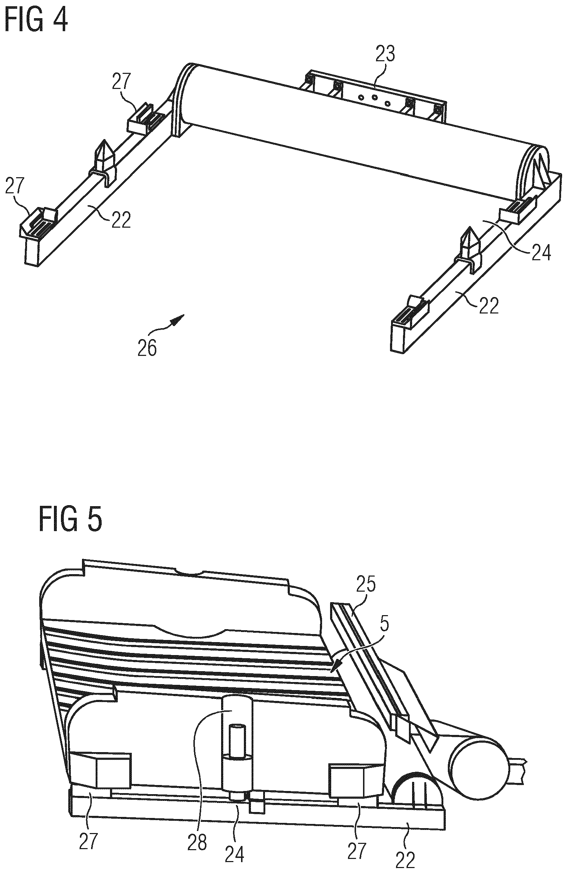

Figur 4 Robotergabel 26 für das «Ergreifen» eines Trays 5;
Figur 5 von einer Robotergabel 26 erfasster Tray 5;

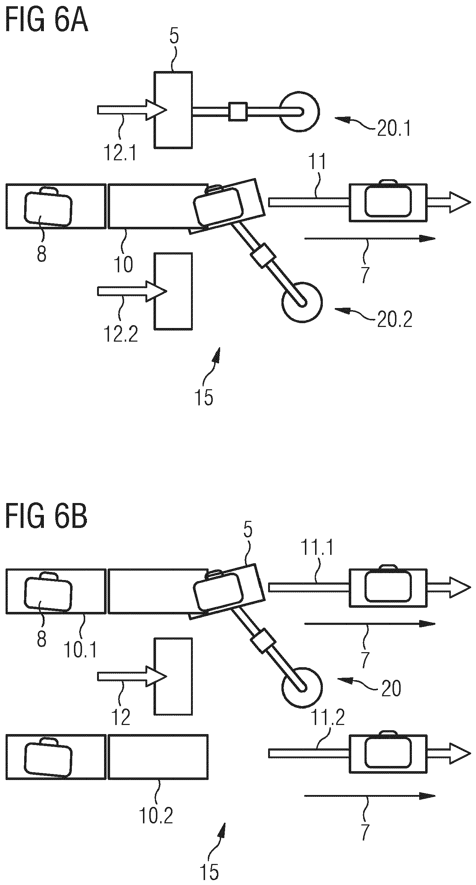

Figur 6A Aufsicht auf eine Topload Konfiguration mit zwei Mehrachsenrobotern 20.1 und 20.2, einem Bandförderer 10 und zwei Behältervorsorgungen 12.1, 12.2;
Figur 6B Aufsicht auf eine Topload Konfiguration mit einem Mehrachsenroboter 20 und mit zwei Bandförderern 10.1 und 10.2 und mit wenigstens zwei Trayförderern 11.2 und 11.2.

Figur 1 zeigt das Prinzip eines Tray Ladeystems 15 in einer Topload Konfiguration gemäss dem Stand der Technik: Gepäckstücke 8 (nicht dargestellt in Figur 1) werden auf einem Bandförderer 10 herangeführt. Unterhalb des Tray Ladesystems 15 werden Trays 5 auf einem Trayförderer 11 herangeführt. Dabei sind Lage des Trays 5 relativ zur Lage der herangeführten Gepäckstücke 8 über eine Steuerung und ein Sensorsystem synchronisiert, so dass das Gepäckstück 8 in einen herangeführten Tray 5 fallen kann.

Figur 2 zeigt die Struktur eines Trays 5 mit einer Vorderwand 6 und einer Rückwand 6 zur Bewegungsrichtung 7 des Trays 5.

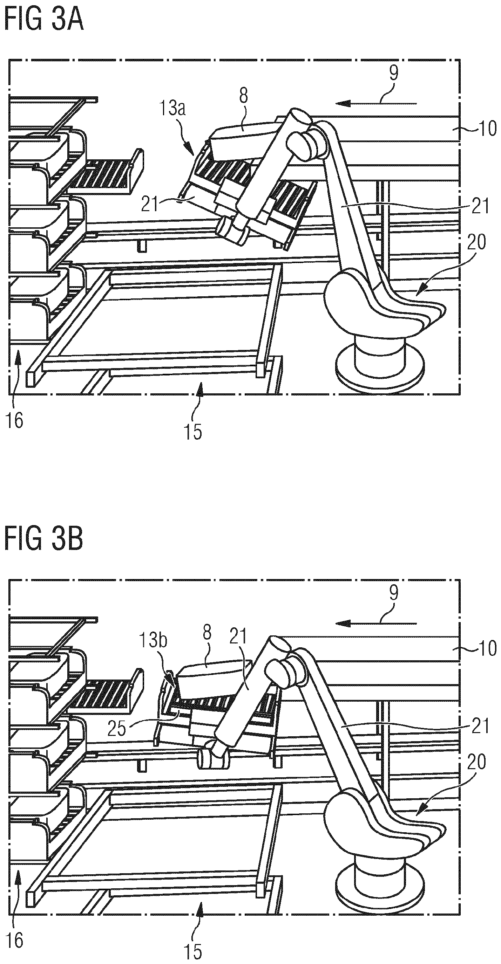

Die Figuren 3A bis 3C zeigen die beispielhafte Abfolge der Bewegungen eines Roboters 20 zum Beladen eines Trays 5 mit einem Gepäckstück 8.

Zunächst zur Begrifflichkeit «Roboter» 20:
Diese Begrifflichkeit umfasst
- Sensoren zur Erfassung der Umwelt und der Achspositionen,
- Aktoren zur Betätigung von Roboterarmen, Robotergabel, usw.
- eine Robotersteuerung,
- mechanische Komponenten einschliesslich Getriebe.
Die hier eingesetzten Roboter sind sogenannte Mehrachsenroboter 20, vorzugsweise also Sechs-Achs-Roboter. Im Folgenden ist jedoch stets nur von «Roboter 20» die Rede.

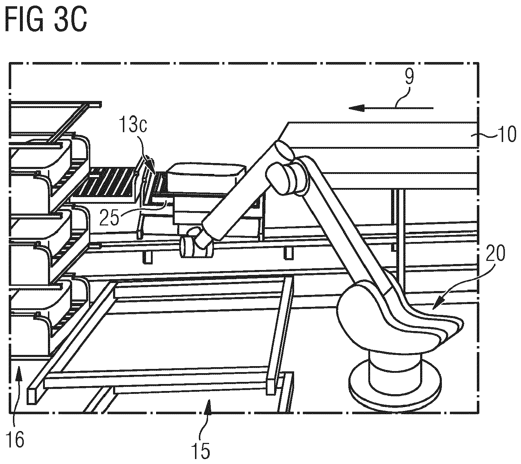

In Figur 3A bis 3C werden auf einem Bandförderer 10 Gepäckstücke 8 herangeführt, nicht dargestellt in diesen Figuren ist das Detektorsystem und die Robotersteuerung. Von einer Behälterversorgung 12, zB einem Tray-Regal 16, holt sich der Roboter 20 einen Tray 5 und führt diesen von rechts nach links unter dem Bandförderer 10 in der Bewegungsrichtung 9 eines auf dem Bandförderer 10 herankommenden Gepäckstücks 8. Dabei ist die Rotorgabel 26 mit dem darauf fixiertem Tray 5 gegen die Bewegungsrichtung 9 des Bandförderers 10 geneigt: → Pfeil 13a in Figur 3A.
Im weiteren Verlauf wird die Neigung reduziert: 7 Pfeil 13b in Figur 3B. Vom Bandförderer 10 wird ein Gepäckstück 8 durch Gravitation in den Tray 5 gefördert. Die longitudinale Geschwindigkeit der Robotergabel 26 mit dem darauf befindlichen Tray 5 wird durch eine Kombinationsbewegung von
   - vertikaler Drehung des Roboters 20,
   - Bewegung der Roboterarme 21 und
   - Drehung der Robotergabel 26
   erreicht.
Durch die vorgenannte Kombinationsbewegung kann erreicht werden, dass die relative Geschwindigkeit der Robotergabel 26 (und damit des darauf fixierten Trays 5) relativ klein ist gegenüber der Geschwindigkeit des herangeführten Gepäckstückes 8 auf dem Bandförderer 10. Relativ klein kann auch ausgedrückt werden durch eine Konvergenz der Relativgeschwindigkeit gegen Null im Moment des «Fallens» des Gepäckstückes 8 in den Tray 5.
Nach dem «Fallen» des Gepäckstücks 8 in den Tray 5 wird die Gabel 26 in eine horizontale Lage gebracht: → Pfeil 13c in Figur 3C.
In der Darstellung der Figuren 3A, 3B und 3C wird der mit einem Gepäckstücke 8 beladene Tray 5 in ein Tray-Regal 16 gelegt.
Anstelle eines Tray-Regals 16 kann auch vorgesehen sein, den mit einem Gepäckstück 8 beladenen Tray 5 auf einen Trayförderer 11 abzulegen. Ein Trayförderer 11 - auch tray line genannt - weist einen Gurtförderer auf.
Tray-Regal 16 und Trayförder 11 werden hier unter dem Oberbegriff Zielstelle subsummiert. An dieser Stelle ist zu betonen, dass das Tray-Regal 16 je nach Verfahrensschritt die Funktion einer Behälterversorgung 12 oder die Funktion einer Zielstelle haben kann.

Die Figur 3A könnte suggerieren, dass das Gepäckstück 8 bei der Förderung in den Tray 5 die Vorderwand 6 berührt. Ein solches Berühren ist möglich, jedoch keineswegs zwingend. Aufgrund der erfassten Lage, Dimension und Geschwindigkeit eines herangeführten Gepäckstücks 8 kann dieses von der Robotersteuerung mehr in die Mitte oder mehr in Richtung der Rückwand 6 des Trays 5 gefördert werden. Dies ist insbesondere im Fall einer Mehrfachbeladung eines Trays 5 erforderlich, um ein Stapeln von Gepäckstücken 8 in einem Tray 5 nach Möglichkeit zu vermeiden.

Figur 4 Zeigt eine Rotorgabel 26 zum Erfassen/Ergreifen eines Trays 5. Der Tray 5 wird dabei vom Roboter 20 durch Heranführen der Robotergabel 26 von unten her erfasst/ergriffen. Die Rotorgabel 26 wird gebildet durch zwei Roboterfinger 22, die je zwei Auflageflächen bzw Auflagenocken 27 zur Auflage eines Trays 5 aufweisen. Zwischen den beiden Auflagenocken 27 eines Roboterfingers 22 ist ein Zylinder 24 mit einer konischen Spitze befestigt, der formschlüssig in eine entsprechende Öffnung 28 des Trays 5 eingreift. Auf diese Weise wird der Tray 5 auf der Gabel 26 passiv fixiert. Die konische Spitze erlaubt eine sichere Einführung des Zylinders 24 in die Öffnung 28 des Trays 5. Die Robotergabel 26 weist zur Befestigung an einem Roboterarm 21 eine Lasche 23 auf. Anstelle des vorgenannten Begriffs Zylinder 24 wird auch der Begriff Dorn verwendet.

Figur 5 zeigt einen auf einer Robotergabel 26 erfassten Tray. Der Tray 5 liegt auf den vorerwähnten Auflagenocken 27 auf. Der Zylinder 24 liegt wie bei Figur 4 erläutert formschlüssig in einer entsprechenden Öffnung 28 des Trays 5. Die Bewegungen der Robotergabel 26 erzeugen teilweise grössere Beschleunigungen und damit auch auf dem darauf fixierten Tray 5. Um ein Herausfallen des oder mehrerer Gepäckstücke 8 aus dem Tray 5 zu verhindern, ist eine Schutzwand 25 an der Lasche 23 zusätzlich befestigt. Denkbar wäre auch eine gegenüberliegende Schutzwand 25' (nicht dargestellt in Figur 5). Diese Schutzwand 25' stört das Erfassen oder Loslassen eines Trays 5 nicht, da die Rotorgabel 26 stets in vertikaler Richtung zum Tray 5 hin oder weg vom Tray 5 bewegt werden muss, um einen Tray 5 zu erfassen oder abzulegen.

Das Detektorsystem kann eine Kamera, eine Infrarotkamera, Bewegungsmelder und je nach Flughafen ein RFID-Lesegerät oder ein Barcode-Reader/Barcode-Scanner umfassen. Die letzteren zwei Geräte dienen insbesondere für die Erfassung des Ziels und der Flugnummer/IATA-Code des betreffenden Gepäckstücks 8. Im praktischen Einsatz muss für den Fall eines «no read» für die Erfassung des Ziels/Flugnummer/IATA-Code eine sogenannte MES-Station (manual encoding station) vorgesehen werden: In Flussrichtung nach dem erwähnten Barcode Reader/Barcodescanner/RFID-Lesegerät muss das betreffende Gepäckstück 5 ausgeschleust werden und in einem manuellen Schritt identifiziert werden, bevor es wieder in den Gepäckstrom auf dem Bandförderer 10 eingeschleust werden kann.

Die Figur 6A zeigt eine Aufsicht auf eine bevorzugte Konfiguration mit zwei Robotern 20.1 und 20.2, einem Bandförderer 10 und zwei Behältervorsorgungen 12.1 und 12.2. Diese Konfiguration hat zwei grosse Vorteile:
i) Redundanz:
   Wenn einer der Roboter 20.1 oder 20.2 oder eine der Behälterversorgungen 12.1 oder 12.2 ausfällt;
ii) Kompensation:
   Gegenüber einem Tray Ladesystem gemäss dem Stand der Technik wie in Figur 1 dargestellt benötigt das Beladen eines Trays 5 mit einem Gepäckstück 8 mit einem Roboter 20 mehr Zeit;
   typischerweise 10s und mehr. Dieser Nachteil kann leicht kompensiert bzw überkompensiert werden durch den Einsatz von zwei oder mehr parallel laufenden Robotern 20.x. Die Arbeitsweise der mehreren Roboter 20.x wird durch die Robotersteuerung koordiniert. Der vorstehend erwähnte Begriff Überkompensation bezieht sich auf die Vermeidung weiterer Sortierprozesse bei der Anwendung des hier vorgeschlagenen Verfahrens, siehe dazu auch die Erläuterung im nachfolgenden Absatz.

Die Figur 6B zeigt eine Aufsicht auf eine Konfiguration mit einem Roboter 20, zwei Bandförderern 10.1 und 10.2, einer Behältervorsorgung 12 und zwei Trayfördern 11.1 und 11.2. Dieses Tray Ladesystem erlaubt zusätzlich neben dem Beladen der Trays 5 mit Gepäckstücken 8 eine (Vor-) Sortierung vorzunehmen auf zwei Trayförderer 11.1. und 11.2. Es sind jedoch Konfiguration mit mehr als zwei Trayfördern 11.1. und 11.2 möglich, so dass neben dem Beladen der Trays 5 eine vollständige Sortierung der Trays 5 erreicht werden kann. Dank des Roboters 20 brauchen all die Trayförderer 11.x nicht in einer einzigen Ebene angeordnet zu sein, sondern können sich auf mehreren Ebenen befinden, selbstverständlich solange diese Trayförderer 11.x sich im Greifraum des Roboters 20 befinden. Wie vorstehend ausgeführt, erreicht die Förderleistung von einem einzigen Roboter 20 nicht die Förderleistung eines Tray Ladesystems gemäss dem Stand der Technik wie in Figur 1 dargestellt. Der Einsatz mehrerer Roboter 20 und ggf die Einführung einer m:n-Beziehung von Bandförderern 10.x und Trayförderern 11.x erhöht den Durchsatz signifikant. Die Roboter 20.x können sowohl rechts und links aber auch auf dem Boden stehend oder unter der Decke hängend angebracht werden. Die Angabe «mehrere Roboter» kann durchaus eine Anzahl von 4 oder mehr Robotern umfassen, die gegebenenfalls auch hintereinander in Flussrichtung der Gepäckströme angeordnet sein können.

### Liste der Bezugszeichen, Glossar

- 5: Tray; Transportbehälter
- 6: Wand; Vorderwand, Rückwand eines Trays 5
- 7: Bewegungsrichtung eines Trays 5 auf einem Trayförderer 11
- 8: Gepäckstück, Stückgut
- 9: Bewegungsrichtung eines Gepäckstücks 8 auf einem Bandförderer 10
- 10, 10.1, 10.2: Bandförderer für Zuführung der Gepäckstücke
- 11, 11.1, 11.2: Zielstelle, Trayförderer, tray line, Gurtförderer
- 12, 12.1, 12.2: Behälterversorgung, Trayversorgung
- 13.a: Lage des vom Roboterfinger getragenen Trays stark geneigt entgegen der Bewegungsrichtung 9 des Band-förderers 10 vor dem Fall des Gepäckstückes 8
- 13.b: Lage des vom Roboterfinger 22 getragenen Trays etwas geneigt entgegen der Bewegungsrichtung 9 des Band-förderers 10 beim Fall des Gepäckstückes 8
- 13.c: Lage des vom Roboterfinger 22 getragenen Trays horizontal nach dem das Gepäckstück 8 auf den Tray 5 gefördert worden ist
- 15: Tray Ladesystem
- 16: Zielstelle, Tray-Regal; temporärer Speicher, Langzeitspeicher; Behälterversorgung
- 20, 20.1, 20.2: Mehrachsenroboter; kurz «Roboter»
- 21, 21.1, 21.2: Roboterarm; Roboterunterarm, Roboteroberarm
- 22: Roboterfinger
- 23: Lasche des Roboterfingers zur Befestigung am Roboterarm
- 24: Zylinder mit konischer Spitze zur formschlüssigen Fixierung eines Trays 5 auf einem Roboterfinger 22
- 25: Schutzwand der Robotergabel, um ein Herausfallen eines Gepäckstücks bei zu starker Neigung oder bei einer Drehung der Robotergabel zu verhindern
- 26: Robotergabel
- 27: Auflagenocken für einen Tray 5 auf der Robotergabel 26
- 28: Öffnung am Tray 6 für eine formschlüssige Fixierung mit einem auf einem Roboterfinger 26 befestigten Zylinder 24

### Akronyme

- IATA: International Air Transport Association
- RFID: Radio Frequency Identification

### Liste der zitierten Dokumente

[1] EP 4 108 604 A1
   «Beladen von Transportbehältern einer Förderanlage, insbesondere einer Flughafen-Gepäckförderanlage, mit Stückgütern variabler Grösse»
   Anmelderin:
      Siemens Aktiengesellschaft; DE - 80333 München
[2] WO 2015/024930 A1
   «SORTIERFÖRDERVORRICHTUNG»
   Anmelderin:
      Siemens Aktiengesellschaft; DE - 80333 München

## Patentansprüche

1. Verfahren zum Beladen von Trays (5) mit Gepäckstücken (8) in einem Tray Ladesystem (15) wobei die Gepäckstücke (8) mit wenigstens einem Bandförderer (10) dem Tray Ladesystem (15) zugeführt werden und die Gepäckstücke (8) für eine Zielstelle der Trays (5) vorgesehen sind,
**gekennzeichnet durch** die Verfahrensschritte,
a) Lage und Ziel der auf dem Bandförderer (10) herangeführten Gepäckstücke (8) werden von einem Detektorsystem registriert,
b) ein Roboter (20) führt mittels einer Robotersteuerung unterhalb des Bandförderers (10) einen auf einer Robotergabel (26) befindlichen Tray (5) in Förderrichtung (9) des Bandförderers (10) gemäss der registrierten Lage der Gepäckstücke (8) ein,
c) das Gepäckstück (8) wird am Ende des Bandförderers (10) durch Gravitation in den Tray (5) gefördert;
d) der mit einem Gepäckstück (5) beladene Tray (5) wird vom Roboter (20) an einer Zielstelle (11, 16) platziert.

2. Verfahren nach Anspruch 1,
**dadurch gekennzeichnet, dass**
im Verfahrensschritt a) die Geschwindigkeit der auf dem Bandförderer (10) herangeführten Gepäckstücke (8) vom Detektorsystem registriert wird und dass
im Verfahrensschritt b) die Robotersteuerung den Roboter (20) so ansteuert, dass die Relativgeschwindigkeit vom Bandförderer (10) zur Rotorgabel (26) gegen Null konvergiert.

3. Verfahren nach Anspruch 1 oder 2,
**dadurch gekennzeichnet, dass**
im Verfahrensschritt b) die Robotersteuerung die Robotergabel (26) so dreht, dass der Tray (5) parallel zur registrierten Lage des Gepäckstückes (8) ausgerichtet ist.

4. Verfahren nach einem der Ansprüche 1 bis 3,
**dadurch gekennzeichnet, dass**
im Verfahrensschritt b) die Robotersteuerung die Robotergabel (26) und damit den Tray (5) gegen die Förderrichtung (9) des Bandförderers (10) neigt (13.a), um das Gepäckstück (8) schonend auf dem Tray (5) zu platzieren.

5. Verfahren nach einem der Ansprüche 1 bis 4,
**dadurch gekennzeichnet, dass**
vorgängig des Verfahrensschrittes b) ein Ergreifen eines Trays (5) von einer Behälterversorgung (12, 16) mit der Robotergabel (26) von unten her erfolgt und der Tray (5) formschlüssig durch einen auf einem Roboterfinger (22) befestigten Zylinder (24) fixiert wird.

6. Verfahren nach einem der Ansprüche 1 bis 5,
**dadurch gekennzeichnet, dass**
die Zielstelle (11, 16)
- als ein Trayförderer (11) für den Weitertransport der mit wenigstens einem Gepäckstück (8) beladenen Trays (5)
oder
- als temporärer Speicher (16) für mit wenigstens einem Gepäckstück (8) beladene Trays (5)
oder
- als Langzeitspeicher für mit wenigstens einem Gepäckstück (8) beladene Trays (5) ausgebildet ist.

7. Verfahren nach einem der Ansprüche 1 bis 6,
**dadurch gekennzeichnet, dass**
im Verfahrensschritt a) die Dimension der auf dem Bandförderer (10) herangeführten Gepäckstücke (8) vom Detektorsystem registriert wird und dass bei gleichem Ziel mehrerer aufeinander folgenden Gepäckstücke (8) diese gemäss ihrer registrierten Dimension im Verfahrensschritt c) in den gleichen Tray (5) gefördert werden.

8. Verfahren nach einem der Ansprüche 1 bis 6,
**dadurch gekennzeichnet, dass**
im Verfahrensschritt a) die Dimension der auf dem Bandförderer (10) herangeführten Gepäckstücke (8) vom Detektorsystem registriert wird und vorgängig des Verfahrensschrittes b) bei gleichem Ziel und gemäss der registrierten Dimension der Gepäckstücke (8) ein Tray (5) von einem als Tray-Regal (16) ausgebildeten temporären Speicher (16) vom Roboter entnommen wird, um ein weiteres Gepäckstück (8) im Verfahrensschritt c) in den entnommenen Tray (5) zu fördern.

9. Verfahren nach einem der Ansprüche 1 bis 8,
**dadurch gekennzeichnet, dass**
im Verfahrensschritt a) das Tray Ladesystem (15) wenigstens zwei Trayförderer (11.1, 11.2) aufweist, um gemäss den ausgelesenen Zielen der Gepäckstücke (8) eine Sortierung der mit den Gepäckstücken (8) beladenen Trays (5) auf die Trayförderer (11.1, 11.2) vorzunehmen.

10. Tray Ladesystem (15) bei dem Gepäckstücke (8) mit einem Bandförderer (10) zugeführt und in Trays (5) abgelegt werden umfassend Mittel zur Durchführung des Verfahrens nach einem der Ansprüche 1 bis 9.

11. Tray Ladesystem (15) nach Anspruch 10 umfassend
- wenigstens einen Bandförderer (10) zum Zuführen von Gepäckstücken (8),
- ein Detektorsystem, das Lage und Ziel der auf dem Bandförderer (10) herangeführten Gepäckstücke (8) registriert,
- einen Roboter (20) und eine zugehörige Robotersteuerung die einen auf einer Robotergabel (26) befindlichen Tray (5) unterhalb des Bandförderers (20) in dessen Förderrichtung (9) einführen so dass am Ende des Band-förderers (10) das Gepäckstück (8) in den Tray (5) gefördert wird,
- eine Zielstelle (11, 16) in die der mit einem Gepäckstück (8) beladene Tray (5) vom Roboter (20) platziert wird.

12. Tray Ladesystem (15) nach Anspruch 11,
**dadurch gekennzeichnet, dass**
die Zielstelle (11, 16)
- als ein Trayförderer (11) für den Weitertransport der mit wenigstens einem Gepäckstück (8) beladenen Trays (5)
oder
- als ein Tray-Regal 16) für mit wenigstens einem Gepäckstück (8) beladene Trays (5) ausgebildet ist.

13. Tray Ladesystem (15) nach Anspruch 11 oder 12,
**dadurch gekennzeichnet, dass**
eine Behälterversorgung (12; 16) vorgesehen ist bei der ein Ergreifen eines Trays (5) von unten her mit einer Robotergabel (26) erfolgt und der Tray (5) eine Öffnung (28) aufweist, in die beim Ergreifen ein auf einem Roboterfinger (24) befestigter Zylinder (24) eingeführt wird, um den Tray (5) auf dem Roboterfinger (22) zu fixieren.

14. Tray Ladesystem (15) nach einem der Ansprüche 11 bis 13,
**dadurch gekennzeichnet, dass**
zwei Roboter (20.1, 20.2) mit je einer eigenen Behälterversorgung (12.1, 12.2) angeordnet sind, um, koordiniert durch die Robotersteuerung, die mit einem Gepäckstück (8) beladenen Trays (5) auf einen Trayförderer (11) platzieren.

15. Tray Ladesystem (15) nach einem der Ansprüche 11 bis 14,
**dadurch gekennzeichnet, dass**
zwei Bandförderer (10.1, 10.2) zum Heranführen der Gepäckstücke (8) und mindestens zwei Trayförderer (11) angeordnet sind, um abhängig von der Anzahl der Trayförderer (11) eine Vorsortierung oder Sortierung der auf die Trays (5) geladenen Gepäckstücke (8) vorzunehmen.
